# EUROPEAN PATENT APPLICATION

(11) **EP 4 772 875 A1**
(43) Date of publication of application: **08.07.2026**
(21) Application number: 25150076.5
(22) Date of filing: 02.01.2025
(51) Int. Cl.: G01N 30/88

(54) **A METHOD FOR MEASURING THE BIURET CONTENT OF A COMPOSITION COMPRISING UREA, BIURET AND AMMONIA**

(71) Applicant: Yara International ASA, 0277 Oslo (NO)
(72) Inventor: Masotti, Marcello, 37045 LEGNAGO (IT); Marchini, Luca, 44100 FERRARA (IT); Reggiani, Alessio, 44122 FERRARA (IT); Porro, Lino Giovanni, 1040 ETTERBEEK (BE)
(74) Representative: AWA Sweden AB

(57) **Abstract**

The present disclosure provides a method for measuring the biuret content of an aqueous solution comprising urea, one or more ammonium salts, free ammonia, and biuret, the method comprises: passing a first aqueous solution comprising urea, one or more ammonium salts, free ammonia, and biuret, through an ion exchange column comprising acid groups with a pKa ranging from 3.0 to 5.0, thereby obtaining a second aqueous solution comprising urea, one or more ammonium salts, and biuret and depleted in ammonia; analyzing the second aqueous solution in a system comprising a high-performance liquid chromatography device, thereby measuring the biuret content of the second aqueous solution; and processing the biuret content of the second aqueous solution, thereby obtaining the biuret content of the first aqueous solution.

## Description

### Field of the disclosure

The present disclosure is related to the field of analytical chemistry.

### Background information

Urea, CO(NH₂)₂, is an organic compound produced in large scale, over 200 million tons annually worldwide, that is mainly used as a fertilizer thanks to its high nitrogen content (46 weight%).

Biuret is an organic compound with the formula C₂H₅N₃O₂, or HN(CONH₂)₂. It can be formed by heating urea at high temperatures, for example above 100 °C. Biuret can be toxic to plants, so its content in urea-based fertilizers is regulated in many countries. Biuret is also undesirable in other industrial applications of urea, such as diesel exhaust fluid.

Due to the nature of industrial urea production (high temperatures and high pressures), it is very difficult to avoid any biuret production, but it is paramount to limit its formation during the different stages of urea production, such that the biuret content of the solid urea product is below the allowed maximum value. In order to limit its formation, it is important to be able to measure the biuret content of aqueous compositions produced at different stages of the urea production process to understand where biuret is produced and the impact of different production parameters on the final biuret concentration of the urea product.

Standard methods, such as ISO 18643, have been developed to measure the biuret content of a composition, in particular of a composition comprising urea and biuret, but existing methods suffer from some drawbacks. So, there is a need to develop new analytical methods for measuring biuret content.

### Summary of the disclosure

One particular operational challenge in measuring the biuret content of compositions obtained during urea production is that these compositions can contain a significant amount of free ammonia, typically up to 20 or 25 weight%. It has been found that passing the aqueous solution comprising urea, one or more ammonium salts, free ammonia, and biuret in an ion exchange column comprising weak acids removes, at least partially, the ammonia comprised in the solution and improves the measurement of the biuret content of the composition.

In a first aspect, the present disclosure provides a method for measuring the biuret content of an aqueous solution comprising urea, one or more ammonium salts, free ammonia, and biuret, the method comprises:
- passing a first aqueous solution comprising urea, one or more ammonium salts, free ammonia, and biuret, through an ion exchange column comprising acid groups with a pKa ranging from 3.0 to 5.0, thereby obtaining a second aqueous solution comprising urea, one or more ammonium salts, and biuret and depleted in ammonia;
- analyzing the second aqueous solution in a system comprising a high-performance liquid chromatography device, thereby measuring the biuret content of the second aqueous solution; and
- processing the biuret content of the second aqueous solution, thereby obtaining the biuret content of the first aqueous solution.

### Brief description of the figures

The following description of the figure of a specific embodiment of a system according to the present disclosure is only given by way of example and is not intended to limit the present explanation, its application or use. In the figure, identical reference numerals refer to the same or similar parts and features.
Figure 1 shows a chromatogram of an aqueous solution obtained according to the state of the art.
Figure 2 shows a chromatogram of an aqueous solution in an embodiment of a method according to the present disclosure.

### Detailed description of the disclosure

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

All references cited in this description are hereby deemed to be incorporated in their entirety by way of reference.

As used herein, the following terms have the following meanings:
"A", "an", and "the" as used herein refers to both singular and plural referents unless the context clearly dictates otherwise. By way of example, "a compartment" refers to one or more than one compartment.

"About" as used herein referring to a measurable value such as a parameter, an amount, a temporal duration, and the like, is meant to encompass variations of +/-20 % or less, in particular +/-10 % or less, more in particular +/-5 % or less, even more in particular +/-1 % or less, and still more in particular +/-0.1 % or less of and from the specified value, in so far such variations are appropriate to perform in the disclosed invention. However, it is to be understood that the value to which the modifier "about" refers is itself also specifically disclosed.

"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

The recitation of numerical ranges by endpoints includes all numbers and fractions subsumed within that range, as well as the recited endpoints.

The expression "weight percent", "%wt" or "weight%", here and throughout the description unless otherwise defined, refers to the relative weight of the respective component based on the overall weight of the formulation.

In a first aspect, the present disclosure provides a method for measuring the biuret content of an aqueous solution comprising urea, one or more ammonium salts, free ammonia, and biuret, the method comprising:
- passing a first aqueous solution comprising urea, one or more ammonium salts, free ammonia, and biuret, through an ion exchange column comprising acid groups with a pKa ranging from 3.0 to 5.0, thereby obtaining a second aqueous solution comprising urea and biuret and depleted in ammonia;
- analyzing the second aqueous solution in a system comprising a high-performance liquid chromatography device, thereby measuring the biuret content of the second aqueous solution; and
- processing the biuret content of the second aqueous solution, thereby obtaining the biuret content of the first aqueous solution.

Aqueous solutions created during a urea production process can comprise up to 2.0 weight% of biuret. So, any additional impurities, such as free ammonia and ammonium salts, in a sample can have a significant impact on the quality and reliability of the HPLC analysis. It was found that when an aqueous solution comprising urea, ammonium salts, and biuret reaches a pH below 4.0, its analysis by HPLC of the biuret content becomes less reliable. It is hypothesized that some of the ammonium salts comprised in the solution is converted into carbamic acid, creating new peaks on the HPLC chromatogram, and decreasing the quality of the analysis. So, it was thought that the strong acid exchange column recommended in standard methods was not well adapted for this purpose.

As used herein, "free ammonia" refers to the fraction of ammonia present in an aqueous solution as the neutral molecule NH₃. Another fraction of the ammonia comprised in an aqueous solution may be present as ammonium ions, for example ammonium carbonate, ammonium carbamate, and ammonium bicarbonate.

It has been found that ion exchange columns with acid groups having a pH ranging from 3.0 to 5.0 were good enough to remove most or all the ammonia comprised in aqueous solutions while maintain the pH of the solution comprising urea and biuret in a range that did not decrease the quality of the subsequent HPLC analysis, for example from 5.0 to 8.0.

An ion exchange column comprises a solid phase which comprises a functionalized surface to which is covalently bound side chains comprising functional groups, such as acids, in particular Brønsted acids. When an aqueous solution comprising basic compounds, such as ammonia, the Brønsted acids react with the basic compounds to form an ionic pair, such that the basic compound is retained by the solid phase.

It has also been found that HPLC analysis coupled with an ultraviolet (UV) detector is a more precise analytical method for measuring biuret content than a photometric method. Biuret has a higher absorption coefficient in the region of 190 to 200 nm than in the region typically used for photometric detection around 550 nm, which allows the detection of lower concentrations. Biuret and urea have polarities that are different enough to provide a good separation on some HPLC columns, such as C-18 and C-8 reverse phase columns.

The biuret content of the second solution depleted in ammonia can be measured in a high-performance liquid chromatography device.

Once the biuret content of the second solution is known, the biuret content of the first solution can be calculated based on the process steps applied to both solutions. For example, if the first and second solution have not been diluted, then the biuret content of the second solution is equal to the biuret content of the first solution.

In some embodiments, wherein the first solution comprises a sample from a device in a urea-producing plant, the user may be interested in determining the biuret concentration of the sample. Depending on how the first solution has been prepared from the sample, the user may calculate the biuret concentration of the sample. For example, if the sample from the device has been diluted 10 times to obtain the first solution, the biuret concentration of the sample is 10 times the calculated biuret concentration of the first solution.

In some embodiments, the ion exchange column comprises alkyl carboxylic acid groups. It has been found that ion exchange columns with alkyl carboxylic groups, i.e., carboxylic groups linked to an alkyl chain comprising at least one carbon, were suitable to remove free ammonia from an aqueous solution while maintaining the pH of the solution above 5.0. Alkyl carboxylic acids have a pKa usually comprised between 3.0 and 5.0: for example, acetic acid (pKa = 4.8), propionic acid (pKa = 4.9), and butyric acid (pKa = 4.8). In some embodiments, the ion exchange column comprises propylcarboxylic acid groups. In some embodiments, the ion exchange column comprises propylcarboxylic acid groups bound to functionalized silica. Silica is a popular choice of material for the core of an ion exchange column. Silica can be easily functionalized by bounding side chains comprising various chemical groups, such as alkyl carboxylic acids.

In some embodiments, the first aqueous solution comprises from 0.001 to 2.0 weight% of biuret.

In some embodiments, the first aqueous solution comprises from 0.01 to 25 weight%, or from 0.01 to 20 weight% of ammonia. The production process of urea begins with the reaction of ammonia and carbon dioxide at high temperature and pressure, which yields an aqueous solution comprising urea, one or more ammonium salts, and free ammonia. This aqueous solution is further processed to remove the ammonium salts, free ammonia, and water comprised therein, to provide a urea melt or a concentrated urea solution. The ammonia content of the aqueous solutions produced in a urea production process progressively decreases along the production process.

In some embodiments, the method comprises collecting a sample of an aqueous solution from a device in a urea-producing plant. The method described herein is suitable for analyzing samples taken from different devices in a urea-producing plant.

In some embodiments preparing the first aqueous solution comprises diluting the sample from a device in a urea-producing plant with water.

In some embodiments, the method comprises diluting a sample of an aqueous solution from a device in a urea-producing plant, thereby producing the first aqueous solution. Samples taken from a device in a urea-producing plant may be so concentrated in one or more components that they are not suitable to be injected directed in an ion-exchange column. It may be preferred to first dilute the sample with water, for example demineralized water, to lower the concentration of the components to levels suitable for the ion-exchange column and HPLC device.

In some embodiments, the one or more ammonium salts are selected from the group consisting of ammonium carbonate, ammonium carbamate, and ammonium bicarbonate. A solution comprising carbon dioxide and ammonia may comprise ammonium salts depending on the temperature of the first solution and ratio of ammonia to carbon dioxide. Ammonia and carbon dioxide in solution can form at least three salts: ammonium carbamate, ammonium carbonate, and ammonium bicarbonate.

In some embodiments, the high-performance liquid chromatography device comprises a reverse-phase column, in particular a C18 or C8 column. A reverse-phase column is suitable for the analysis of a solution comprising urea and biuret. Urea and biuret are polar compounds, so the retention time on a reverse-phase column is rather short, which is desirable as it allows faster analyses.

In some embodiments, analyzing the second aqueous solution in a system comprising a high-performance liquid chromatography device comprises eluting a sample of the second aqueous solution using water as mobile phase. In an HPLC system, the mobile phase refers to the solvent that is continuously injected in the column.

In some embodiments, analyzing the second aqueous solution in a system comprising a high-performance liquid chromatography device comprises eluting a sample of the second aqueous solution in the HPLC device at a temperature ranging from 20 to 40 °C, or from 30 to 40 °C.

In some embodiments, the high-performance liquid chromatography device comprises a UV or near-UV detector. In some embodiments, the high-performance liquid chromatography device comprises a detector coupled to an emitter configure to emit a signal with a wavelength ranging from 180 to 200 nm. The UV or near-UV region ranging from 180 to 200 nm is suitable to analyze an aqueous solution comprising urea and biuret since both compounds absorb these wavelengths.

In some embodiments, water is added to the second aqueous solution obtained after the ion exchange column. HPLC devices are sensitive and require that the concentration of the components to be analyzed do not excess a pre-determined value. Depending on the concentration in urea, one or more ammonium salts, and biuret of the second aqueous solution obtained from the ion exchange column, it may be necessary to add water to it, such that the concentration of the three components is within a desired range. The specific concentration threshold for each component depends on the characteristics of each HPLC system.

In some embodiments, the first aqueous solution comprising urea, one or more ammonium salts, free ammonia, and biuret, comprises an aqueous solution obtained from a device or a pipe comprised in a urea-producing plant.

In some embodiments, the sample is collected from a synthesis section, a recovery section, an evaporation section and/or a finishing section of the urea-producing plant.

Urea-producing plants comprise a synthesis section, a recovery section, an evaporation section, and a finishing section. The synthesis section, recovery section, and evaporation section process aqueous solutions comprising urea, ammonium salts, free ammonia, and biuret, with different compositions.

The synthesis section comprises a synthesis device, and optionally a high-pressure stripper and a high-pressure carbamate condenser. The synthesis device is configured to contain ammonia and carbon dioxide under high temperature and pressure to form a solution comprising urea, one or more ammonium salts, free ammonia, and biuret. If present, the high-pressure stripper is configured to receive the solution produced in the synthesis device, heat up said solution to remove some of the ammonia and ammonium salts comprised therein. The solution produced in the high-pressure stripper also comprises urea, one or more ammonium salts, free ammonia, and biuret. The high-pressure carbamate condenser is configured to receive gases produced by the high-pressure stripper and produce an aqueous solution comprising ammonium salts and free ammonia.

The recovery section is configured to receive the solution produced by the high-pressure stripper or the synthesis device and to remove the one or more ammonium salts and ammonia comprised therein. A recovery section may contain one or more heat exchangers to remove one or more ammonium salts and ammonia from an aqueous solution. A recovery section may contain one or more carbamate condensers to condense a gas stream comprising ammonia and carbon dioxide into an aqueous solution comprising ammonia and ammonium salts. A recovery section may also contain one or more liquid/vapor separators. The solution produced by the recovery section comprises urea, in particular at least 50 weight% of urea, biuret, and optionally, one or more ammonium salts and free ammonia.

The evaporation section is configured to receive the aqueous solution produced by the recovery section and concentrate it by removing water. The evaporation section may comprise one or more evaporation units, each units being configured to produce a melt comprising urea, biuret, and optionally one or more ammonium salts and free ammonia.

It is highly desirable to measure the biuret content of an aqueous solution at all stages in the urea production method to understand where biuret is formed, such that measures can be developed to reduce this biuret formation.

### Example

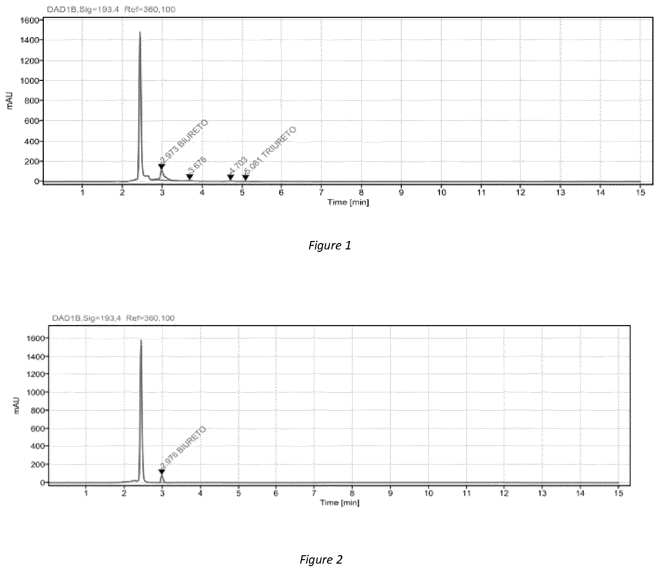

About 200 mL of an aqueous solution produced by a high-pressure stripper in a urea-producing plant was obtained. The solution comprises 50 weight% of urea, 11 weight% of CO₂, present as ammonium salts, 12 weight% of NH₃, present as free ammonia and ammonium salts, and water up to 100 weight%. The solution was diluted with water to 1.0 L. A sample of this diluted solution was passed through an ion exchange column comprising strong acidic groups (Bond Elut SCX comprising aryl sulfonic acids, pKa < 1). The solution obtained was analyzed by HPLC using a reverse-phase C8 column, using water as mobile phase (1 mL/min, 35 °C). The chromatogram obtained from a UV detector at 193.4 nm is reproduced as Figure 1. The biuret peak can be seen at the retention time, t = 2.98 min, but the peak is not symmetrical due to the presence of an impurity with a similar retention time. By measuring the area under the signal, the biuret content of the aqueous solution from the high-pressure stripper is calculated to be 0.46 weight%. Other impurities can also be seen at retention times, for example at t = 3.58, 4.70, and 5.08 minutes.

Another sample of the diluted aqueous stripper solution was passed through an ion exchange column comprising propylcarboxylic acids (pKa ≈ 4.5-5.0) as required by the method according to the present disclosure. The solution obtained was analyzed by HPLC using the same conditions as above: reverse-phase C8 column, and water as mobile phase (1 mL/min, 35 °C). The chromatogram obtained from a UV detector at 193 nm is reproduced as Figure 2. The biuret peak can be seen at t = 2.98 min, and the peak is symmetrical, easier to analyze and measure. The impurity signals seen in Figure 1 are absent from Figure 2. By measuring the area under the signal, the biuret content of the aqueous solution from the high-pressure stripper is calculated to be 0.20 weight%. This shows that the treatment with the strong acid column creates impurities with a similar retention time as biuret, artificially increasing the biuret content of the aqueous solution.

## Claims

1. A method for measuring the biuret content of an aqueous solution comprising urea, one or more ammonium salts, free ammonia, and biuret, the method comprises:
- passing a first aqueous solution comprising urea, one or more ammonium salts, free ammonia, and biuret through an ion exchange column comprising acid groups with a pKa ranging from 3.0 to 5.0, thereby obtaining a second aqueous solution comprising urea, one or more ammonium salts, and biuret and depleted in ammonia;
- analyzing the second aqueous solution in a system comprising a high-performance liquid chromatography device, thereby measuring the biuret content of the second aqueous solution; and
- processing the biuret content of the second aqueous solution, thereby obtaining the biuret content of the first aqueous solution.

2. The method according to claim 1, wherein the ion exchange column comprises alkyl carboxylic acid groups.

3. The method according to claim 1 or 2, wherein the first aqueous solution comprises at least 0.1 weight% of free ammonia.

4. The method according to any one of claim 1 to 3, wherein the high-performance liquid chromatography device comprises a reverse-phase column, in particular a C18 or C8 column.

5. The method according to any one of claim 1 to 4, wherein the method comprises collecting a sample from a device in a urea-producing plant and preparing the first aqueous solution with the sample.

6. The method according to claim 5, wherein preparing the first aqueous solution comprises diluting the sample with water.

7. The method according to any one of claim 1 to 6, wherein the first aqueous solution comprises from 0.001 to 2.0 weight% of biuret.

8. The method according to any one of claim 1 to 7, wherein the second aqueous solution has a pH of at least 4.0, or from 5.0 to 8.0.

9. The method according to any one of claim 1 to 8, wherein the first aqueous solution comprises from 0.01 to 25 weight%, or from 0.01 to 20 weight% of ammonia.

10. The method according to any one of claims 5 to 9, wherein the sample is collected from a synthesis section, a recovery section, an evaporation section and/or a finishing section of the urea-producing plant.
